(19) Europäisches Patentamt
European Patent Office
Office européen des brevets

(11) **EP 1 361 458 B1**

(12) **EUROPÄISCHE PATENTSCHRIFT**

(45) Veröffentlichungstag und Bekanntmachung des Hinweises auf die Patenterteilung:
**08.06.2005 Patentblatt 2005/23**

(51) Int Cl.⁷: **G01S 13/93**, B62D 15/02, B62D 1/28, B60T 7/12, B62D 15/00, B60K 41/20, B60T 7/22

(21) Anmeldenummer: **03006854.8**

(22) Anmeldetag: **28.03.2003**

(54) **Verfahren zum Betreiben eines Parkhilfesystems und Parkhilfesystem**

Procedure for operating a parking aid system and parking aid system

Procédé pour opérer un système d'assistance pour garer et système d'assistance pour garer

(84) Benannte Vertragsstaaten:
**DE FR GB IT**

(30) Priorität: **08.05.2002 DE 10220426**

(43) Veröffentlichungstag der Anmeldung:
**12.11.2003 Patentblatt 2003/46**

(73) Patentinhaber: **Valeo Schalter und Sensoren GmbH**
**74321 Bietigheim-Bissingen (DE)**

(72) Erfinder:
• **Gotzig, Heinrich, Dr.**
**74081 Heilbronn (DE)**
• **Jecker, Nicolas**
**73728 Esslingen (DE)**

• **Grüdl, Dietmar**
**71706 Markgröningen (DE)**
• **Hurtado, Miguel**
**West Lafayette, IN 47906 (US)**

(74) Vertreter: **Dreiss, Fuhlendorf, Steimle & Becker Patentanwälte,**
**Postfach 10 37 62**
**70032 Stuttgart (DE)**

(56) Entgegenhaltungen:
| | |
|---|---|
| **EP-A- 1 043 213** | **DE-A- 3 813 083** |
| **DE-A- 3 844 340** | **DE-A- 10 030 449** |
| **DE-A- 19 940 007** | **DE-U- 29 718 862** |
| **FR-A- 2 785 383** | **US-A- 5 742 141** |

## Beschreibung

Die Erfindung betrifft ein Verfahren zum Betreiben eines Einund/oder Ausparkhilfesystems sowie ein Ein- und/oder Ausparkhilfesystem für ein Fahrzeug.

Derartige Systeme sind beispielsweise aus der DE 297 18 862 U1 bekannt geworden. Der Einsatz solcher Systeme hat gezeigt, dass sich der Parkvorgang trotz Anweisung an den Fahrzeuglenker als schwierig herausstellt. Insbesondere gleichzeitiges Betätigen des Lenkrades und Beschleunigen bzw. Abbremsen des Fahrzeuges auf Anweisung ist nicht unproblematisch.

Aus der DE 38 44 340 A ist eine elektronische Mess- und Steuervorrichtung bekannt geworden, die der Unterstützung des Manövrierens eines Fahrzeugs in eine Parklücke dient. Das System berechnet dabei den optimalen Weg des Fahrzeugs und gibt akustische Anweisungen für das momentane Steuermanöver. Ferner wart es vor Kollisionen und greift ggf. in den Steuerungsablauf, beispielsweise durch Bremsen, ein.

Aus der FR-A-2 785 383 ist bekannt geworden, bei einem Einparkvorgang einen möglichen Manövrierweg zu berechnen. Beim Manövrieren wird das Fahrzeug gestoppt, wenn sich ein Gegenstand im Manövrierweg befinden sollte.

Aus der DE 38 13 083 A1 ist eine automatische Einparkeinrichtung bekannt geworden, die dazu vorgesehen ist, den Fahrer anzuweisen, wie er das Fahrzeug entlang eines speziellen Wegs einzuparken hat.

Der vorliegenden Erfindung liegt die Aufgabe zugrunde, ein Verfahren zum Betreiben eines Ein- und/oder Ausparkhilfesystems sowie ein Ein- und/oder Ausparkhilfesystem bereitzustellen, das ein besseres, einfacheres und sichereres Ein- bzw. Ausparken ermöglicht.

Diese Aufgabe wird durch ein Verfahren mit den Merkmalen des Anspruchs 1 gelöst.

Das beschriebene Verfahren hat den Vorteil, dass sich der Fahrzeuglenker aufgrund des automatischen Abbremsens bzw. Beschleunigens des Fahrzeuges auf das Lenken konzentrieren kann. Dem Fahrzeuglenker wird mitgeteilt, ob er das Fahrzeug vorwärts oder rückwärts setzen soll und wie weit er das Lenkrad in die entsprechende Richtung einzuschlagen hat. Ein Einschlagen des Lenkrades bis zum Anschlag ist nicht unbedingt erforderlich. Insbesondere in Verbindung mit einem Automatikgetriebe ist ein derartiges Verfahren sehr vorteilhaft. Hierbei kann der Fahrzeuglenker vollständig auf ein Beschleunigen verzichten, da durch die Automatik das Fahrzeug auch ohne ein Betätigen des Gaspedals vorwärts getrieben wird. Der Fahrzeuglenker hat dann lediglich den Anweisungen Folge zu leisten, die das Drehen des Lenkrades betreffen. Erfindungsgemäß ist die Bremskraft abhängig von der Geschwindigkeit, mit der das Lenkrad gedreht wird. Wird das Lenkrad nur sehr langsam betätigt, so ist die Bremskraft vorzugsweise höher, als wenn das Lenkrad schnell gedreht wird.

Das Bestimmen der Länge und/oder Breite der Parklücke kann beispielsweise beim langsamen Vorbeifahren an der Parklücke erfolgen. Ist das Fahrzeug bereits geparkt, kann die Länge und/oder Breite der Parklücke beim stehenden Fahrzeug in der Parklücke erfasst werden.

Ein denkbarer Parkablauf ergibt sich aus dem erforderlichen Lenkradeinschlag und der zugehörigen Geschwindigkeit über den zurückzulegenden Weg.

Ein vorteilhaftes Verfahren ergibt sich dann, wenn Schritt b) gleichzeitig zu den Schritten c) und d) erfolgt und wenn im Schritt b) abhängig von dem bereits erfolgten Parkablauf bzw. von der jeweils momentanen Fahrzeugposition neue denkbare Parkabläufe bestimmt werden. Aufgrund des jeweils momentanen Lenkradeinschlages und der Fahrzeuggeschwindigkeit wird erfindungsgemäß bestimmt, wie eine zukünftige Lenkwinkeländerung ausfallen muss, um ein ideales Parken des Fahrzeuges zu erreichen. Vorteilhafterweise werden zur Bestimmung des Parkablaufes die räumlichen Abmessungen des Fahrzeuges, Abstände zu die Parklücke umgebenden Objekten, Lenkradeinschlag, Geschwindigkeit und/oder die jeweils momentane Fahrzeugposition sowie gegebenenfalls weitere, insbesondere fahrzeugspezifische Größen berücksichtigt.

Zur Bestimmung des bereits erfolgten Parkablaufes werden insbesondere die gefahrene Geschwindigkeit und/oder der zurückgelegte Weg und/oder die erfolgten Lenkradbewegungen berücksichtigt.

Eine weitere, besonders bevorzugte Ausführungsform der Erfindung sieht vor, dass während des Parkablaufes nicht nur ein automatisches Abbremsen und/oder Beschleunigen des Fahrzeuges vorgenommen wird, sondern dass das Fahrzeug auch automatisch gesteuert wird. Eine derartige Ausgestaltung hat den Vorteil, dass der Fahrzeuglenker weder das Fahrzeug abbremsen noch das Lenkrad betätigen muss. Ein ideales Einparken kann folglich gewährleistet werden.

Die zu verwendende Bremskraft zum Abbremsen des Fahrzeuges ist vorteilhafterweise abhängig von bzw. proportional zur Differenz $\Delta\varphi$ zwischen dem vorgegebenen Lenkradeinschlag und dem tatsächlichen Lenkradeinschlag. Schlägt der Fahrzeuglenker das Lenkrad wie vorgegeben ein, so kann die Bremskraft geringer ausfallen, d.h. das Fahrzeug kann zügiger eingeparkt werden. Weicht der tatsächliche Lenkradeinschlag von dem vorgegebenen Lenkradeinschlag ab, so erfolgt der Parkvorgang nicht optimal. Das Fahrzeug ist stärker abzubremsen, um gegebenenfalls erforderliche Korrekturen beim Parkvorgang vornehmen zu können.

Erfindungsgemäß ist ferner vorteilhaft, wenn die Bremskraft abhängig von bzw. proportional zu dem Abstand $\Delta d$ vom Fahrzeug zu einem in Fahrtrichtung gelegenen Objekt ist. Ist der Abstand relativ groß, so kann die Fahrzeuggeschwindigkeit höher sein als wenn das Fahrzeug sehr nahe an einem die Parklücke begrenzenden Objekt ist.

Als besonders vorteilhaft hat sich erwiesen, wenn die Bremskraft $F_B$ proportional ist zu:

$$F_{Brems} \sim (\Delta\varphi * e^{c_1 * \Delta\varphi} + \frac{1}{\Delta d} * e^{c_2 * \Delta d}).$$

Eine derartige Bremskraft wird den Anforderungen an den Parkvorgang in optimaler Weise gerecht.

Die eingangs genannte Aufgabe wird außerdem durch ein Computerprogramm gelöst, das zur Durchführung des erfindungsgemäßen Verfahrens geeignet ist, wenn es auf einem Steuer- und/oder Regelgerät ausgeführt wird. Das Computerprogramm ist vorteilhafterweise abgespeichert, insbesondere auf einem Flash-Memory.

Ferner wird die eingangs genannte Aufgabe gelöst durch ein Steuer- und/oder Regelgerät zum Betreiben eines Parkhilfesystems, das zum Steuern und/oder Regeln des erfindungsgemäßen Verfahrens geeignet ist.

Die eingangs genannte Aufgabe wird ferner durch ein Einund/oder Ausparkhilfesystem für ein Fahrzeug gelöst, umfassend wenigstens einen Abstandsmesssensor, einen Wegmess- und/oder einen Geschwindigkeitsmesssensor, einen Lenkwinkelmesssensor, ein mit den Sensoren gekoppeltes Steuer- und/oder Regelgerät zur Datenauswertung und zur Steuerung und/oder Regelung eines Brems- und/oder Beschleunigungssystems und zur Steuerung und/oder Regelung einer Wiedergabeeinrichtung zur Wiedergabe von Anweisungen an den Fahrzeuglenker, wobei das Parkhilfesystem zur Durchführung des erfindungsgemäßen Verfahrens geeignet ist.

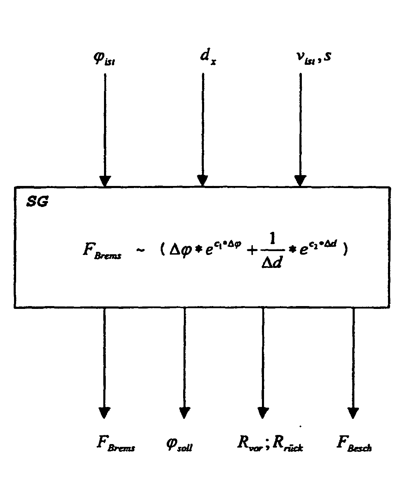

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Figur ist ein erfindungsgemäßes Parkhilfesystem 10 schematisch dargestellt. Das Parkhilfesystem umfasst ein zentrales Steuergerät 12, das verschiedene Eingangs- und Ausgangsgrößen aufweist. Eingangsgrößen des Steuergeräts 12 sind beispielsweise der tatsächliche Lenkwinkel $\varphi_{ist}$, verschiedene Abstände $d_x$ des Fahrzeugs zu die Parklücke begrenzenden Objekten und die Geschwindigkeit des Fahrzeuges $v_{ist}$ bzw. der vom Fahrzeug zurückgelegte Weg S. Der Lenkwinkel $\varphi_{ist}$ wird dem Steuergerät über einen Lenkwinkelsensor mitgeteilt. Die verschiedenen Abstände $d_x$ werden von an dem Fahrzeug vorgesehenen Abstandssensoren bzw. von einem Umfeldkennungssystems an das Steuergerät 12 übermittelt. Die Geschwindigkeit $v_{ist}$ bzw. der zurückgelegte Weg $S$ des Fahrzeuges wird mittels eines Geschwindigkeitssensors bzw. mittels eines Wegmesssensors erfasst.

Ausgangsgrößen des Steuergeräts 12 sind beispielsweise eine zur Bremskraft proportionale Größe $F_{Brems}$, die zur Ansteuerung eines Bremssystems vorgesehen ist, und der zur Erzielung eines optimalen Parkvorganges erforderliche Lenkwinkel $\varphi_{soll}$. Eine weitere Ausgangsgangsgröße des Steuergeräts ist die Richtung, in welche der Fahrzeuglenker das Fahrzeug zu setzen hat, nämlich $R_{vor}$ für vorwärts und $R_{rück}$ für rückwärts. Ferner kann eine Ausgangsgröße ein Wert $F_{Besch}$ sein, der zur Ansteuerung eines Beschleunigungssystems dient, um eine denkbare Beschleunigung des Fahrzeugs zu erreichen.

Beim Vorbeifahren des Fahrzeugs an einer Parklücke wird die Länge und/oder Breite der Parklücke bestimmt. Dazu können an dem Fahrzeug Abstandsmesssensoren bzw. ein Fahrzeugumfelderfassungssystem vorgesehen sein. In einem nächsten Schritt werden ausgehend von der Position des Fahrzeugs relativ zur Parklücke denkbare Einparkabläufe für das Fahrzeug in die Parklücke bestimmt.

In einem nächsten Schritt wird der Fahrzeuglenker angewiesen, in welche Richtung $R_{vor}$, $R_{rück}$ das Fahrzeug zu bewegen ist und in welche Richtung bzw. wie weit das Lenkrad $\varphi_{soll}$ einzuschlagen ist. Die Ausgangsgrößen $\varphi_{soll}$ und $R_{vor}$, $R_{rück}$ werden dazu dem Fahrzeuglenker über ein nicht dargestelltes Wiedergabegerät mitgeteilt. Die Wiedergabe kann insbesondere akustisch, optisch oder taktil erfolgen.

Während des Einparkablaufes wird aufgrund des jeweils momentanen Lenkradeinschlages $\varphi_{ist}$ und der zugehörigen Fahrzeuggeschwindigkeit $V_{ist}$ bestimmt, wie eine zukünftige Lenkwinkeländerung $\varphi_{soll}$ ausfallen muss, um ein ideales Parken des Fahrzeuges zu erreichen. Der Wert $\varphi_{soll}$ wird dem Fahrzeuglenker mitgeteilt.

Beim Parkvorgang wird das Fahrzeug über die Ausgangsgröße $F_{Brems}$ automatisch zum geeigneten Zeitpunkt abgebremst. Der Fahrzeuglenker muss während des Einparkvorganges die Bremse vorteilhafterweise nicht betätigen. Um ein Auffahren auf ein die Parklücke begrenzendes Objekt zu verhindern, kann bei zu hoher Geschwindigkeit während des Einparkvorganges bzw. bei zu nahem Anfahren an ein stehendes Fahrzeug das Steuergerät das einparkende Fahrzeug über die Ausgangsgröße $F_{Brems}$ entsprechend stark abgebremst oder auch gestoppt werden. Die Größe $F_{Brems}$ ist dabei proportional zu bzw. abhängig von dem Wert $\Delta\varphi$, der die Differenz zwischen dem vorgegebenen Lenkradeinschlag $\varphi_{soll}$ und dem tatsächlichen Lenkradeinschlag $\varphi_{ist}$ bildet. Ferner ist $F_{Brems}$ proportional zu bzw. abhängig von dem Wert $\Delta d$, der den Abstand des Fahrzeuges von einem in Fahrtrichtung gelegenen Objekt wiedergibt. Insbesondere ist:

$$F_{Brems} \sim (\Delta\varphi * e^{c_1 * \Delta\varphi} + \frac{1}{\Delta d} * e^{c_2 * \Delta d}).$$

Zur Ermittlung des vorgesehenen Einparkvorganges können weitere Eingangsgrößen, insbesondere fahrzeugspezifische Eingangsgrößen, vorgesehen sein. Ferner kann das Steuergerät SG weitere Ausgangsgrößen zur Erleichterung des Parkvorganges aufweisen.

## Patentansprüche

1. Verfahren zum Betreiben eines Ein- und/oder Ausparkhilfesystems für ein Fahrzeug, **gekennzeichnet durch** folgende Schritte:

   a) Bestimmen der Länge und/oder Breite einer Parklücke,
   b) Bestimmen von wenigstens einem denkbaren Einund/oder Ausparkablauf für das Fahrzeug in die Parklücke bzw. aus der Parklücke,
   c) Anweisen des Fahrzeuglenkers, in welche Richtung das Fahrzeug zu bewegen ist und in welche Richtung wie weit das Lenkrad einzuschlagen ist, und
   d) automatisches Abbremsen oder ggf. Beschleunigen des Fahrzeuges während des Einund/oder Ausparkablaufes, wobei die Bremskraft ($F_{Brems}$) abhängig ist von der Geschwindigkeit, mit der das Lenkrad gedreht wird,
   e) wobei die Schritte c) und d) in beliebiger Reihenfolge nacheinander und/oder zeitgleich erfolgen können.

2. Verfahren nach Anspruch 1, **dadurch gekennzeichnet, dass** Schritt b) zeitgleich zu den Schritten c) und d) erfolgt und dass in Schritt b) abhängig von dem bereits erfolgten Parkablauf bzw. von der jeweils momentanen Fahrzeugposition neue denkbare Parkabläufe bestimmt werden.

3. Verfahren nach Anspruch 1 oder 2, **dadurch gekennzeichnet, dass** zur Bestimmung des Parkablaufes die räumlichen Abmessungen des Fahrzeugs, Abstände zu die Parklücke umgebenden Objekten, Lenkradeinschlag, Geschwindigkeit und/oder die jeweils momentane Fahrzeugposition berücksichtigt werden.

4. Verfahren nach Anspruch 1, 2 oder 3, **dadurch gekennzeichnet, dass** zur Bestimmung des bereits erfolgten Parkablaufes die gefahrene Geschwindigkeit und/oder der zurückgelegte Weg und/oder die erfolgten Lenkradbewegungen berücksichtigt werden.

5. Verfahren nach einem der vorhergehenden Ansprüche, **dadurch gekennzeichnet, dass** das Fahrzeug während des Parkablaufes automatisch gesteuert wird.

6. Verfahren nach einem der vorhergehenden Ansprüche, **dadurch gekennzeichnet, dass** die Bremskraft abhängig von der Differenz $\Delta\varphi$ zwischen dem vorgegebenen Lenkradeinschlag und dem tatsächlichen Lenkradeinschlag ist.

7. Verfahren nach einem der vorhergehenden Ansprüche, **dadurch gekennzeichnet, dass** die Bremskraft abhängig von dem Abstand $\Delta d$ vom Fahrzeug zu einem in Fahrtrichtung gelegenen Objekt ist.

8. Verfahren nach einem der vorhergehenden Ansprüche, **dadurch gekennzeichnet, dass** die Bremskraft $F_{Brems}$ proportional ist zu:

$$F_{Brems} \sim (\Delta\varphi * e^{c_1 * \Delta\varphi} + \frac{1}{\Delta d} * e^{c_2 * \Delta d}),$$

mit:

$\Delta\varphi$: Differenz zwischen dem vorgegebenen Lenkradeinschlag $\varphi_{soll}$ und dem tatsächlichen Lenkradeinschlag $\varphi_{ist}$;
$\Delta d$: Abstand vom Fahrzeug zu einem in Fahrtrichtung gelegenen Objekt;
$c_1$: Konstante 1;
$c_2$: Konstante 2.

9. Computerprogramm, **dadurch gekennzeichnet, dass** es zur Durchführung des Verfahrens nach einem der vorhergehenden Ansprüche geeignet ist, wenn es durch ein Steuer- und/oder Regelgerät ausgeführt wird.

10. Computerprogramm nach Anspruch 9, **dadurch gekennzeichnet, dass** es auf einem Speicher, insbesondere auf einem Flash-Memory, abgespeichert ist.

11. Steuer- und/oder Regelgerät zum Betreiben eines Parkhilfesystems, **dadurch gekennzeichnet, dass** es zum Steuern und/oder Regeln eines Verfahrens nach einem der Ansprüche 1 bis 8 geeignet ist.

12. Ein- und/oder Ausparkhilfesystem für ein Fahrzeug umfassend wenigstens einen Abstandsmesssensor, einen Wegmesssensor bzw. einen Geschwindigkeitsmesssensor, einen Lenkwinkelmesssensor, ein mit den Sensoren verbundenes Steuer- und/oder Regelgerät zur Datenauswertung, zur Steuerung und/oder Regelung eines Brems- und/oder Beschleunigungssystems und zur Steuerung und/oder Regelung einer Wiedergabeeinrichtung zur Wiedergabe von Anweisungen an den Fahrzeuglenker, wobei das Parkhilfesystem zur Durchführung des Verfahrens nach einem der Ansprüche 1 bis 8 geeignet ist.

## Claims

1. Method for operating a parking-aid system for assisting the manoeuvring of a vehicle into and/or out of a parking space, **characterized by** the following steps:

   (a) determining the length and/or width of the parking space,
   (b) determining at least one possible sequence of steps for manoeuvring the vehicle into and/or out of the parking space,
   (c) instructing the driver of the vehicle in which direction to move the vehicle and how far and in which direction to turn the steering wheel, and
   (d) automatically braking or, where applicable, accelerating the vehicle during the sequence of parking steps, the braking force ($F_{brake}$) being a function of the speed with which the steering wheel is being turned,
   (e) wherein steps (c) and (d) may take place one after the other in either order and/or simultaneously.

2. Method according to claim 1, **characterized in that** step (b) occurs at the same time as steps (c) and (d) and in step (b), depending on the sequence of parking steps that has already occurred or on the instantaneous position of the vehicle at any one time, new possible sequences of parking steps are determined.

3. Method according to claim 1 or claim 2, **characterized in that**, for the purpose of determining the sequence of parking steps, the spatial dimensions of the vehicle, distances to objects around the parking space, steering-wheel lock, speed and/or the instantaneous position of the vehicle at any one time are taken into account.

4. Method according to claim 1, 2 or 3, **characterized in that**, for the purpose of determining the sequence of parking steps that has already occurred, the speed at which the vehicle has been driven and/or the distance travelled and/or the steering-wheel movements that have occurred are taken into account.

5. Method according to any one of the preceding claims, **characterized in that** the vehicle is automatically controlled during the sequence of parking steps.

6. Method according to any one of the preceding claims, **characterized in that** the braking force is a function of the difference $\Delta\varphi$ between the specified steering-wheel lock and the actual steering-wheel lock.

7. Method according to any one of the preceding claims, **characterized in that** the braking force is a function of the distance $\Delta d$ between the vehicle and an object lying in the direction of travel.

8. Method according to any one of the preceding claims, **characterized in that** the braking force $F_{brake}$ is proportional to:

$$F_{brake} : (\Delta\varphi * e^{c_1 * \Delta\varphi} + \frac{1}{\Delta d} * e^{c_2 * \Delta d}),$$

   where:

   $\Delta\varphi$ is the difference between the specified steering-wheel lock $\varphi_{target}$ and the actual steering-wheel lock $\varphi_{actual}$;
   $\Delta d$ is the distance between the vehicle and an object lying in the direction of travel;
   $c_1$ is a constant 1, and
   $c_2$ is a constant 2.

9. Computer program, **characterized by** being suitable for carrying out the method according to any one of the preceding claims, when executed by a control and/or regulating apparatus.

10. Computer program according to claim 9, **characterized in that** it is stored in a memory, in particular a flash memory.

11. Control and/or regulating apparatus for operating a parking-aid system, **characterized in that** it is suitable for controlling and/or regulating a method according to any one of claims 1 to 8.

12. A parking-aid system for assisting the manoeuvring of a vehicle into and/or out of a parking space, including at least one distance-measuring sensor, a sensor for measuring how far the vehicle has travelled or a speed-measuring sensor, a steering-angle measuring sensor, a control and/or regulating apparatus associated with the sensors for evaluating data, for controlling and/or regulating a braking and/or accelerating system and for controlling and/or regulating a reproduction means for reproducing instructions to the driver of the vehicle, wherein the parking-aid system is suitable for carrying out the method according to any one of claims 1 to 8.

## Revendications

1. Procédé pour l'exploitation d'un système d'aide à l'entrée et à la sortie d'un emplacement de stationnement pour un véhicule automobile, **caractérisé par** les étapes suivantes :

a) détermination de la longueur et/ou de la largeur d'un créneau de stationnement,
b) détermination d'au moins une opération d'entrée et/ou de sortie de stationnement concevable pour le véhicule dans le créneau de stationnement ou hors du créneau de stationnement,
c) directive destinée au conducteur du véhicule pour savoir dans quelle direction le véhicule doit être déplacé et dans quelle direction et de combien le volant doit être braqué, et
d) freinage ou éventuellement accélération automatique du véhicule pendant l'opération d'entrée et/ou de sortie de stationnement, la force de freinage ($F_{Brems}$) étant dépendante de la vitesse à laquelle le volant est tourné,
e) les étapes c) et d) pouvant s'effectuer dans un ordre quelconque de façon successive et/ou simultanée.

2. Procédé selon la revendication 1, **caractérisé en ce que** l'étape b) s'effectue en même temps que les étapes c) et d) et **en ce que**, lors de l'étape b), de nouvelles opérations de stationnement concevables sont déterminées en fonction de l'opération de stationnement déjà effectuée ou de la position du véhicule momentanée.

3. Procédé selon la revendication 1 ou 2, **caractérisé en ce que**, pour déterminer l'opération de stationnement, les dimensions dans l'espace du véhicule, des distances aux objets entourant le créneau de stationnement, l'angle de braquage du volant, la vitesse et/ou la position momentanée respective du véhicule sont pris en compte.

4. Procédé selon la revendication 1, 2 ou 3, **caractérisé en ce que**, pour déterminer l'opération de stationnement déjà effectuée, la vitesse atteinte et/ou la trajectoire parcourue et/ou les mouvements effectués du volant sont pris en compte.

5. Procédé selon l'une quelconque des revendications précédentes, **caractérisé en ce que** le véhicule est commandé automatiquement pendant l'opération de stationnement.

6. Procédé selon l'une quelconque des revendications précédentes, **caractérisé en ce que** la force de freinage est dépendante de la différence $\Delta\varphi$ entre l'angle de braquage prédéfini du volant et l'angle de braquage réel du volant.

7. Procédé selon l'une quelconque des revendications précédentes, **caractérisé en ce que** la force de freinage est dépendante de la distance $\Delta d$ du véhicule à un objet situé dans le sens de marche.

8. Procédé l'une quelconque des revendications précédentes, **caractérisé en ce que** la force de freinage $F_{Brems}$ est proportionnelle à :

$$F_{Brems} \sim (\Delta\varphi * e^{c_1 * \Delta\varphi} + \frac{1}{\Delta d} * e^{c_2 * \Delta d})$$

avec :

$\Delta\varphi$ : différence entre l'angle de braquage prédéfini du volant $\varphi_{soll}$ et l'angle de braquage réel du volant $\varphi_{ist}$ ;
$\Delta d$ : distance du véhicule à un objet situé dans le sens de marche ;
$C_1$ : constante 1 ;
$C_2$ : constante 2

9. Programme informatique, **caractérisé en ce qu'**il est approprié pour la mise en oeuvre du procédé selon l'une quelconque des revendications précédentes lorsqu'il est réalisé par un appareil de commande et/ou de réglage.

10. Programme informatique selon la revendication 9, **caractérisé en ce qu'**il est mémorisé dans une mémoire, en particulier dans une mémoire flash.

11. Appareil de commande et/ou de réglage pour l'exploitation d'un système d'aide au stationnement, **caractérisé en ce qu'**il est approprié pour la commande et/ou le réglage d'un procédé selon l'une quelconque des revendications 1 à 8.

12. Système d'aide à l'entrée et/ou à la sortie du stationnement pour un véhicule comprenant au moins un capteur de mesure de distance, un capteur de mesure de trajectoire et un capteur de mesure de vitesse, un capteur de mesure d'angle de braquage, un appareil de commande et/ou de, réglage relié aux capteurs pour l'analyse de données, pour la commande et/ou le réglage d'un système de freinage et/ou d'accélération et pour la commande et/ou le réglage d'un système de restitution pour la restitution de directives destinées au conducteur du véhicule, le système d'aide au stationnement étant approprié pour la mise en oeuvre du procédé selon l'une quelconque des revendications 1 à 8.

$$\varphi_{ist} \qquad d_x \qquad v_{ist}, s$$

SG

$$F_{Brems} \;\sim\; ( \Delta\varphi * e^{c_1 * \Delta\varphi} + \frac{1}{\Delta d} * e^{c_2 * \Delta d} )$$

$$F_{Brems} \qquad \varphi_{soll} \qquad R_{vor}; R_{r\ddot{u}ck} \qquad F_{Besch}$$